# EUROPÄISCHE PATENTSCHRIFT

(11) **EP 1 811 738 B1**
(45) Veröffentlichungstag und Bekanntmachung des Hinweises auf die Patenterteilung: **29.02.2012**
(21) Anmeldenummer: 06022575.2
(22) Anmeldetag: 28.10.2006
(51) Int. Cl.: H04L 29/06

(54) **WLAN-Basisstation, lokale Kommunikationsanlage und Verfahren zum Herstellen einer Sprachverbindung**
WLAN base station, local communication system and method for voice call setup
Station de base de WLAN, système de communication local et méthode pour l'établissement d'une connexion vocale

(30) Priorität: 23.01.2006 DE 102006003300
(43) Veröffentlichungstag der Anmeldung: 25.07.2007
(73) Patentinhaber: Deutsche Telekom AG, 53113 Bonn (DE)
(72) Erfinder: Burkard, Ingolf, 63457 Hanau (DE); Grote, Ulrich, 61231 Bad Nauheim (DE)

(56) Entgegenhaltungen:
- US-A1- 2004 141 484
- US-A1- 2005 068 938

## Beschreibung

Die Erfindung betrifft eine WLAN-Basisstation für den Einsatz in einem drahtlosen lokalen Netzwerk, eine lokale Kommunikationsanlage mit einer derartigen WLAN-Basisstation sowie ein Verfahren zum Herstellen einer Sprachverbindung zwischen wenigstens zwei Teilnehmern über ein analoges oder digitales Fernsprechnetz.

Im Wesentlichen existieren heute zwei konkurrierende öffentliche Telekommunikationsnetze, nämlich Fernsprechnetze und Mobilfunknetze, über welche der klassische Sprachdienst abgewickelt werden kann. Fernsprechnetze sind als analoge Festnetze, auch PSTN (Public Switched Telefone Network) genannt, oder digitale Festnetze, wie das ISDN, ausgebildet. Mobilfunknetze basieren beispielsweise auf dem GSM-Standard.

Im Bereich der herkömmlichen Fernsprechnetze ist es weiterhin bekannt, mit schnurlosen Telefonen zu telefonieren, die basierend auf dem DECT-Standard mit einer an einem Teilnehmeranschluss angeschalteten Basisstation kommunizieren.

Neben Fernsprechnetzen und Mobilfunknetzen existieren öffentliche Computernetze, wie zum Beispiel das Internet. Seit einiger Zeit werden neue Technologien entwickelt, um Telefondienste, auch Voice over IP (VoIP) oder IP-Telefonie genannt, auch über Computernetze abzuwickeln.

Der Erfindung liegt die Aufgabe zugrunde, Teilnehmern eines herkömmlichen analogen oder digitalen Fernsprechnetzes eine weitere Möglichkeit an die Hand zu geben, um mittels drahtloser Endeinrichtungen über das Fernsprechnetz telefonieren zu können.

Ein Kerngedanke der Erfindung ist darin zu sehen, die Technologie drahtloser lokaler Netzwerke, die auch als WLAN (Wireless Local Area Network) bekannt sind, und die aus der Internet-Telefonie bekannte IP-Technologie zu verwenden, um Fernsprechteilnehmern die Möglichkeit einzuräumen, mittels drahtloser Endeinrichtungen über das Festnetz zu kommunizieren.

Das oben genannte technische Problem löst die Erfindung zum einen durch die Merkmale des Anspruchs 1.

Danach ist eine WLAN-Basisstation für den Einsatz in einem an sich bekannten drahtlosen lokalen Netzwerk (WLAN von Wireless Local Area Network) vorgesehen. Die WLAN-Basisstation weist wenigstens eine Schnittstelle zum Anschalten der WLAN-Basisstation an ein Fernsprechnetz auf. Hierzu kann die Schnittstelle als analoge Schnittstelle ausgebildet sein, die mit einer analogen Teilnehmeranschlusseinrichtung, die eine TAE-Anschlussdose sein kann, verbunden werden kann. Die Schnittstelle kann aber auch als digitale Schnittstelle ausgebildet sein, die mit einer Netzabschlusseinrichtung des ISDN, auch NTBA genannt, verbunden werden kann.

Weiterhin weist die WLAN-Basisstation eine WLAN-Schnittstelle zur Kommunikation mit einer drahtlosen Kommunikationseinrichtung sowie eine Umsetzungseinrichtung auf, welche zum Umsetzen von Sprachsignalen, die gemäß einem Kommunikationsprotokoll zur Steuerung einer IP-Telefonie kodiert sind, in Sprachsignale, die über ein Fernsprechnetz übertragen werden können, ausgebildet ist.

Das Basisgerät der drahtlosen Kommunikationseinrichtung kann zum Beispiel ein PDA oder ein herkömmliches Mobilfunktelefon (Handy) sein, welches zum erfindungsgemäßen Einsatz modifiziert wird.

Vorteilhafte Weiterbildungen sind Gegenstand der Unteransprüche.

Damit die WLAN-Basisstation eine IP-Telefonverbindung über die WLAN-Schnittstelle aufbauen kann, ist eine entsprechend ausgebildete Steuereinrichtung vorgesehen.

Damit über die WLAN-Basisstation eine IP-Telefonverbindung zu einer drahtlosen Kommunikationseinrichtung unterstützt werden kann, weist die WLAN-Basisstation einen SIP (Session Initiation Protocol)-Proxy auf, der vorzugsweise in der Umsetzungseinrichtung implementiert ist.

Um einen flexiblen Einsatz der WLAN-Basisstation zu ermöglichen, ist diese als bewegbare, d.h. frei aufstellbare Einrichtung ausgebildet.

Das oben genannte technische Problem wird weiterhin durch die Merkmale des Anspruchs 6 gelöst.

Danach ist eine lokale Kommunikationsanlage mit wenigstens einer bei einem Benutzer installierten Teilnehmeranschlusseinrichtung, welche mit einem Fernsprechnetz verbunden ist, vorgesehen. Die lokale Kommunikationsanlage weist wenigstens eine WLAN-Basisstation nach einem der Ansprüche 1 bis 5 auf. Weiterhin ist wenigstens eine drahtlose Kommunikationseinrichtung vorgesehen, die eine WLAN-Schnittstelle zum Senden und Empfangen von IP-Sprachsignalen an beziehungsweise von der WLAN-Basisstation sowie eine Einrichtung zum Steuern einer IP-Telefonie von und zu der WLAN-Basisstation aufweist.

Vorteilhafte Weiterbildungen der lokalen Kommunikationsanlage sind Gegenstand der Unteransprüche.

Damit zwischen der WLAN-Basisstation und der drahtlosen Kommunikationseinrichtung eine IP-Sprachverbindung aufgebaut werden kann, ist eine entsprechend ausgebildete Steuereinrichtung vorgesehen.

Gemäß einer vorteilhaften Weiterbildung der Steuereinrichtung kann diese auf ein IP-Kommunikationsprotokoll, welches vorteilhafterweise das SIP-Protokoll enthält, zugreifen. Auf diese Weise ist es möglich, mit Hilfe der lokalen Kommunikationsanlage über eine WLAN-Funkverbindung eine IP-Telefonie abzuwickeln.

Bei dem Fernsprechnetz handelt es sich um ein öffentliches analoges Fernsprechnetz, welches den Fachkreisen auch als Festnetz oder PSTN (Public Switched Telephone Network) bekannt ist. Das Fernsprechnetz kann auch das digitale ISDN sein.

Um das Einsatzgebiet der drahtlosen Kommunikationseinrichtung zu erweitern, kann es sich hierbei um eine mobile Funkeinrichtung, auch Handy genannt, handeln, welche eine Funkschnittstelle zur Kommunikation mit einem Mobilfunknetz aufweist. Beispielsweise unterstützt die Funkschnittstelle den GSM- und/oder UMTS-Standard.

Das oben genannte technische Problem wird ebenfalls durch die Verfahrensschritte des Anspruchs 11 gelöst.

Hiernach ist ein Verfahren zum Herstellen einer Sprachverbindung zwischen wenigstens zwei Teilnehmern über ein analoges oder digitales Fernsprechnetz umschrieben, wobei wenigstens der gerufene Teilnehmer eine drahtlose Kommunikationseinrichtung enthält, welche eine WLAN-Schnittstelle und eine Einrichtung zum Steuern einer IP-Telefonie von und zu einer mit einer Teilnehmeranschlusseinrichtung des gerufenen Teilnehmers verbundenen WLAN-Basisstation nach einem der Ansprüche 1 bis 5 enthält. Die drahtlose Kommunikationseinrichtung kann wiederum ein herkömmliches Handy sein, welches zum erfindungsgemäßen Einsatz angepasst worden ist.

Zunächst wird eine vorbestimmte Teilnehmerrufnummer eines am Fernsprechnetz angeschlossenen Teilnehmers an einer dem rufenden Teilnehmer zugeordneten Endeinrichtung gewählt. Unter Ansprechen auf die gewählte vorbestimmte Teilnehmerrufnummer wird eine Sprachverbindung über das Fernsprechnetz zu der Teilnehmeranschlusseinrichtung des gerufenen Teilnehmers aufgebaut. Weiterhin wird eine drahtlose IP-Telefonverbindung von der WLAN-Basisstation zu der drahtlosen Kommunikationseinrichtung des gerufenen Teilnehmers aufgebaut, wobei die ankommende Sprachverbindung der drahtlosen Kommunikationseinrichtung signalisiert wird. Nunmehr kann die Sprachverbindung an der drahtlosen Kommunikationseinrichtung angenommen werden. Ist dies der Fall, werden die über das Fernsprechnetz empfangenen Sprachsignale in IP-basierte Sprachsignale umgesetzt, welche über die drahtlose IP-Telefonverbindung zur drahtlosen Kommunikationseinrichtung übertragen werden. In umgekehrte Richtung werden die von der drahtlosen Kommunikationseinrichtung kommenden IP-basierten Sprachsignale in Sprachsignale umgesetzt, die über das Fernsprechnetz übertragen werden können.

Das oben genannte technische Problem wird zudem durch die Verfahrensschritte des Anspruchs 12 gelöst.

Danach wird ein Verfahren zum Herstellen einer Sprachverbindung zwischen wenigstens zwei Teilnehmern über ein analoges oder digitales Fernsprechnetz zur Verfügung gestellt, wobei wenigstens der rufende Teilnehmer eine drahtlose Kommunikationseinrichtung enthält, welche eine WLAN-Schnittstelle mit einer Einrichtung zum Steuern einer IP-Telefonie von und zu einer mit einer Teilnehmeranschlusseinrichtung des rufenden Teilnehmers verbundenen WLAN-Basisstation nach einem der Ansprüche 1 bis 5 enthält.

Zunächst wird eine vorbestimmt Teilnehmerrufnummer eines am Fernsprechnetz angeschlossenen Teilnehmers an der drahtlosen Kommunikationseinrichtung des rufenden Teilnehmers eingegeben. Unter Ansprechen auf die eingegebene vorbestimmte Teilnehmerrufnummer wird eine IP-Telefonverbindung von der drahtlosen Kommunikationseinrichtung zu der WLAN-Basisstation aufgebaut. Anschließend wird eine Sprachverbindung über das Fernsprechnetz zum gerufenen Teilnehmer aufgebaut. Die ankommende Sprachverbindung wird dann dem gerufenen Teilnehmer signalisiert und von diesem angenommen. Die von der drahtlosen Kommunikationseinrichtung kommenden IP-basierten Sprachsignale werden in Sprachsignale umgesetzt, die über das Fernsprechnetz zum gerufenen Teilnehmer übertragen werden. In ähnlicher Weise werden über das Fernsprechnetz empfangene Sprachsignale in IP-basierte Sprachsignale umgesetzt, und über die drahtlose IP-Telefonverbindung zur drahtlosen Kommunikationseinrichtung übertragen.

Die Erfindung wird nachfolgend anhand eines Ausführungsbeispiels in Verbindung mit einer beiliegenden Zeichnung näher erläutert.

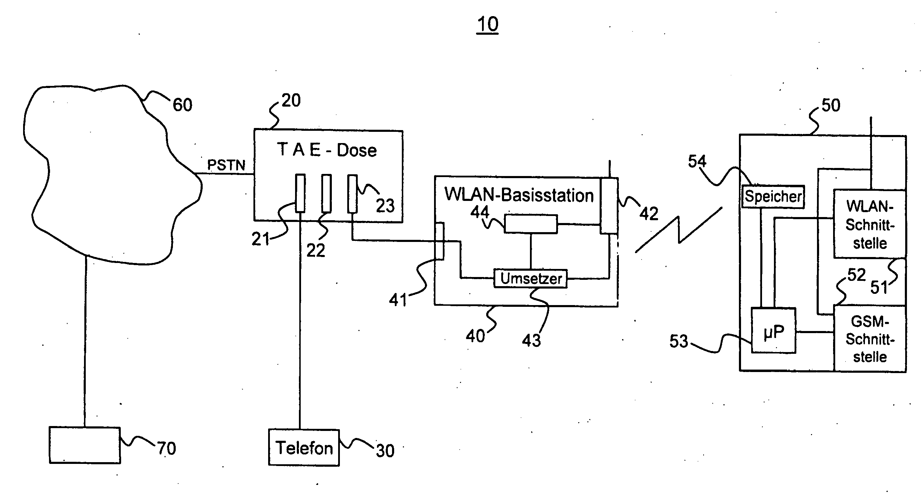

Die einzige Figur zeigt beispielhaft eine lokale Kommunikationsanlage 10, in der die Erfindung verwirklicht ist. In dem dargestellten Beispiel ist eine analoge Teilnehmeranschlussdose 20 und beispielhaft ein Telefon 70 mit einem analogen Fernsprechnetz 60 verbunden. Die bei einem Kunden installierte Teilnehmeranschlussdose 20, kurz auch TAE-Dose genannt, weist beispielsweise drei Buchsen 21, 22 und 23 auf. An die Buchse 21 ist über einen TAE-Stecker ein Telefon 30 angeschlossen. An die Buchse 23 ist über einen TAE-Stecker eine WLAN-Basisstation 40 angeschlossen. Hierzu weist die WLAN-Basisstation 40 eine analoge Schnittstelle 41 auf.

An dieser Stelle sei darauf hingewiesen, dass die WLAN-Basisstation 40 alternativ oder zusätzlich auch eine digitale Schnittstelle aufweisen kann, über die die WLAN-Basisstation 40 an einen digitalen Teilnehmernetzanschluss, auch NTBA genannt, an das ISDN angeschaltet werden kann.

Die WLAN-Basisstation 40 weist weiterhin eine WLAN-Schnittstelle 42 auf, über die eine Kommunikationsverbindung zu einer drahtlosen Kommunikationseinrichtung 50 hergestellt werden kann.

Ein wesentliches Merkmal der lokalen Kommunikationsanlage 10 ist darin zu sehen, dass zwischen der WLAN-Basisstation 40 und der drahtlosen Kommunikationseinrichtung 50 eine IP-Telefonverbindung aufgebaut werden kann.

Hierzu weist die WLAN-Basisstation 40 eine Umsetzungseinrichtung 43 auf, die auch einen an sich bekannten SIP-Proxy enthalten kann. Die Umsetzungseinrichtung 43 sorgt dafür, dass Sprachsignale, die gemäß einem Kommunikationsprotokoll zur Steuerung einer IP-Telefonie kodiert sind, in Sprachsignale, die über ein Fernsprechnetz übertragen werden können, umgesetzt werden. Das Kommunikationsprotokoll kann das SIP-Protokoll zum Abwickeln einer IP-Telefonie enthalten.

Weiterhin ist eine Steuereinrichtung 44 vorgesehen, die die Überwachung und Steuerung der WLAN-Basisstation 40 übernimmt. Die Steuereinrichtung 44 dient auch dazu, eine IP-Telefonverbindung über die WLAN-Schnittstelle 42 aufzubauen. Wie in der Figur gezeigt, ist die WLAN-Basisstation 40 als mobile Einrichtung aufgebaut, die jederzeit auch an eine andere TAE-Dose angeschlossen werden kann.

Angemerkt sei an dieser Stelle, dass an der WLAN-Basisstation 40 nicht nur die drahtlose Kommunikationseinrichtung 50, sondern auch weitere drahtlose Kommunikationseinrichtungen angemeldet werden können. Die zur Anmeldung erforderlichen Daten werden in einem nicht dargestellten Speicher der WLAN-Basisstation 40 hinterlegt. Um eine Funkverbindung zwischen der drahtlosen Kommunikationseinrichtung 50 und der WLAN-Basisstation 40 aufbauen zu können, weist die drahtlose Kommunikationseinrichtung 50 eine WLAN-Schnittstelle 51 auf. In besonders zweckmäßiger Weise dient ein Handy als drahtlose Kommunikationseinrichtung, die beispielsweise eine GSM-Schnittstelle 52 aufweist, um eine Kommunikation über ein Mobilfunknetz in herkömmlicher Weise führen zu können. Um eine drahtlose IP-Telefonverbindung zwischen der WLAN-Basisstation 40 und der drahtlosen Kommunikationseinrichtung 50 aufbauen zu können, ist in der drahtlosen Kommunikationseinrichtung 50 eine Steuereinrichtung 53 vorgesehen, die im vorliegenden Beispiel die Funktion eines SIP-Client unterstützt. Hierzu ist in einem Speicher 54 unter anderem das sogenannte SIP-Protokoll abgelegt. Die Steuereinrichtung 53 kann auf den Speicher 54 zugreifen, um über die WLAN-Schnittstelle 51 eine IP-Telefonverbindung zur WLAN-Basisstation 40 aufbauen und unterstützen zu können.

Die drahtlose Kommunikationseinrichtung 50 kann derart ausgebildet sein, dass sie abgehende Sprachverbindungen über die WLAN-Basisstation 40 führt, solange sie im Versorgungsbereich der lokalen Kommunikationsanlage 10 ist. Sobald sie den Versorgungsbereich, im vorliegenden Beispiel den Versorgungsbereich der Basisstation 40 verlässt, wird bei einem Gesprächswunsch eine Verbindung automatisch über die GSM-Schnittstelle 52 ins Mobilfunknetz aufgebaut.

Nachfolgend wird die Funktionsweise der lokalen Kommunikationsanlage 10 näher erläutert.

Zunächst wird der Fall betrachtet, bei dem das drahtlose Kommunikationsgerät 50 als rufender Teilnehmer verwendet wird, um ein Gespräch mit einem am Fernsprechnetz 60 angeschlossenen Fernsprechteilnehmer führen zu können.

Angenommen sei, dass das drahtlose Kommunikationsgerät 50 sich bereits an der WLAN-Basisstation 40 angemeldet hat. Nunmehr gibt der Benutzer der drahtlosen Kommunikationseinrichtung 50 die Teilnehmerrufnummer des Teilnehmeranschlusses ein, an dem das Telefon 70 an das Fernsprechnetz 60 angeschlossen ist. Anschließend wird am drahtlosen Kommunikationsgerät 50 die Wähltaste betätigt und die Steuereinrichtung 53 baut unter Steuerung des im Speicher 54 abgelegten SIP-Protokolls eine IP-Sprachverbindung über die WLAN-Schnittstelle 51 zur WLAN-Schnittstelle 42 der WLAN-Basisstation 40 auf. Die gewählte Rufnummer wird über die IP-Sprachverbindung und über die TAE-Dose 20 zur Teilnehmer-Vermittlungsstelle (nicht dargestellt) des Fernsprechnetzes 60 übermittelt. Unter Ansprechen auf die gewählte Teilnehmerrufnummer baut das Fernsprechnetz 60 nunmehr eine Sprachverbindung zum Telefon 70 des gerufenen Teilnehmers auf. Nach der Gesprächsannahme können Sprachsignale zwischen dem Telefon 70 und dem drahtlosen Kommunikationsgerät 50 übertragen werden. Die am drahtlosen Kommunikationsgerät 50 eingegebenen Sprachsignale werden über die aufgebaute IP-Sprachverbindung zur WLAN-Basisstation 40 übertragen. Die Umsetzungseinrichtung 43 wandelt die IP-Sprachsignale in Sprachsignale um, die über die Teilnehmeranschlussdose 20 in das Fernsprechnetz 60 und von dort zum Telefon 70 übertragen werden können. Im vorliegenden Fall handelt es sich um analoge Sprachsignale, da das Fernsprechnetz als analoges Festnetz ausgebildet ist. Alternativ ist es denkbar, dass die Umsetzungseinrichtung 43 die empfangenen IP-Sprachsignale in digitale Sprachsignale umsetzt, die über das ISDN zum Telefon 70 übertragen werden können.

In umgekehrter Richtung werden die vom Telefon 70 erzeugten analogen Sprachsignale über das Fernsprechnetz 60, über die TAE-Dose 23 und die Schnittstelle 41 zur WLAN-Basisstation 40 übertragen. Die Umsetzungseinrichtung 43 setzt dann die empfangenen analogen Sprachsignale in IP-Sprachsignale um, die über die aufgebaute IP-Telefonverbindung zur drahtlosen Kommunikationseinrichtung 50 übertragen werden können.

Wird, wie im geschilderten Beispiel das drahtlose Kommunikationsgerät 50 als rufender Teilnehmer verwendet, kann der Kunde auch auf das im drahtlosen Kommunikationsgerät 50 hinterlegte SIM-Telefonbuch für abgehende Gespräche zugreifen.

Nunmehr wird der Fall beschrieben, bei dem das drahtlose Kommunikationsgerät 50 der gerufene Teilnehmer ist.

Angemerkt sei zunächst, dass sowohl das an der TAE-Dose 20 angeschlossene Telefon 30 als auch das drahtlose Kommunikationsgerät 50 über die gleiche Teilnehmeranschlußnummer erreicht werden können.

Der rufende Teilnehmer gibt nunmehr an seinem Telefon 70 die Teilnehmeranschlußrufnummer der TAE-Dose 20 ein. Unter Ansprechen auf die gewählte Teilnehmerrufnummer stellt das Fernsprechnetz 60 eine analoge Sprachverbindung zur TAE-Dose 20 her. Unter Ansprechen auf den Gesprächswunsch baut die WLAN-Basisstation 40 unter Steuerung der Steuereinrichtung 44 eine IP-Telefonverbindung zum drahtlosen Kommunikationsgerät 50 auf. Der an der TAE-Dose 20 ankommende Gesprächswunsch wird nunmehr sowohl an das Telefon 30 als auch an das drahtlose Kommunikationsgerät 50 signalisiert. Der Kunde der Teilnehmeranschlußdose 20 kann nunmehr das ankommende Gespräch entweder an seinem Telefon 30 oder aber am drahtlosen Kommunikationsgerät 50 entgegen nehmen. Im vorliegenden Fall sei angenommen, dass sich das drahtlose Kommunikationsgerät 50 innerhalb des Versorgungsbereiches der WLAN-Basisstation 40 befindet und der Kunde das Gespräch an der drahlosen Kommunikationseinrichtung 50 annimmt. Telefon 70 erzeugte Sprachsignale werden nunmehr über das Fernsprechnetz 60 und über die TAE-Dose 20 zur WLAN-Basisstation 40 übertragen.

In der Umsetzungseinrichtung 43 werden die empfangenen analogen Fernsprechsignale in IP-Sprachsignale umgesetzt und über die WLAN-Schnittstelle 42 als IP-Sprachsignale zur WLAN-Schnittstelle 51 des drahtlosen Kommunikationsgerätes 50 übertragen. In umgekehrter Richtung werden die vom drahtlosen Kommunikationsgerät 50 kommenden IP-Sprachsignale vom Umsetzer 43 der WLAN-Basisstation 40 in analoge Sprachsignale umgesetzt, die über die TAE-Dose 20 in das Fernsprechnetz 60 und dann zum Telefon 70 gelangen.

An dieser Stelle sei noch angemerkt, dass das drahtlose Kommunkationsgerät 50 derart ausgebildet sein kann, dass abgehende Gespräche über die WLAN-Basisstation 40 ins Fernsprechnetz 60 geleitet werden, solange sich das drahtlose Kommunkationsgerät 50 im Versorgungsbereich der Basisstation 40 aufhält. Andernfalls werden abgehende Gespräche über die GSM-Schnittstelle 52 in das Mobilfunknetz geleitet.

## Patentansprüche

1. Lokale Kommunikationsanlage (10) mit wenigstens einer bei einem Nutzer installierten Teilnehmeranschlusseinrichtung (20), die mit einem Fernsprechnetz (60) verbunden ist,
wenigstens einer WLAN-Basisstation (40) für den Einsatz in einem drahtlosen lokalen Netzwerk mit
wenigstens einer Schnittstelle (41) zum Anschalten der WLAN-Basisstation (40) an das Fernsprechnetz (60),
einer WLAN-Schnittstelle (42) zur Kommunikation mit einer drahtlosen Kommunikationseinrichtung (50) und
einer Einrichtung (43) zum Umsetzen von Sprachsignalen, die gemäß einem Kommunikationsprotokoll zur Steuerung einer IP-Telefonie codiert sind, in Sprachsignale, die über ein Fernsprechnetz übertragen werden können,
wenigstens einer drahtlosen Kommunikationseinrichtung (50), die eine WLAN-Schnittstelle (51) zum Senden und Empfangen von IP-Sprachsignalen an bzw. von der WLAN-Basisstation (40), eine Einrichtung (53) zum Steuern einer IP-Telefonie von und zu der WLAN-Basisstation (40) und eine GSM-Funkschnittstelle (52) zur Kommunikation mit einem Mobilfunknetz aufweist, wobei
die drahtlose Kommunikationseinrichtung derart ausgebildet ist, dass abgehende Gespräche über die WLAN-Basisstation (40) in das Fernsprechnetz (60) geleitet werden, solange sich die drahtlose Kommunikationseinrichtung (50) im Versorgungsbereich der WLAN-Basisstation (40) aufhält und andernfalls abgehende Gespräche über die GSM- Funkschnittstelle (52) in das Mobilfunknetz geleitet werden.

2. Lokale Kommunikationsanlage nach Anspruch 1,
**dadurch gekennzeichnet, dass**
in der WLAN-Basisstation (40) eine analoge und/oder digitale Schnittstelle (41) zum Anschalten der WLAN-Basisstation (40) an das Fernsprechnetz (60) vorgesehen ist.

3. Lokale Kommunikationsanlage nach Anspruch 1 oder 2,
**dadurch gekennzeichnet, dass**
die WLAN-Basisstation (40) die eine Einrichtung (44) zum Aufbauen einer IP-Telefonverbindung über ihre WLAN-Schnittstelle (42) aufweist.

4. Lokale Kommunikationsanlage nach Anspruch 3,
**dadurch gekennzeichnet, dass**
die Umsetzungseinrichtung (43) der WLAN-Basisstation (40) einen SIP-Proxy enthält.

5. Lokale Kommunikationsanlage nach einem der Ansprüche 1 bis 4, **dadurch gekennzeichnet, dass**
die WLAN-Basisstation (40) eine bewegbare Einrichtung ist.

6. Lokale Kommunikationsanlage nach einem der Ansprüche 1 bis 5, **dadurch gekennzeichnet, dass** die Steuereinrichtung (53) der drahtlosen Kommunikationseinrichtung (50) eine IP-Telefonverbindung zur WLAN-Basisstation (40) aufbauen kann.

7. Lokale Kommunikationsanlage nach Anspruch 6,
**dadurch gekennzeichnet, dass**
das die Steuereinrichtung (53) der drahtlosen Kommunikationseinrichtung (50) auf ein IP-Kommunikationsprotokoll, welches das SIP-Protokoll enthält, zugreift.

8. Lokale Kommunikationsanlage nach einem der Ansprüche 1 bis 7,
**dadurch gekennzeichnet, dass**
das Fernsprechnetz (60) ein analoges oder digitales Fernsprechnetz ist.

9. Verfahren zum Herstellen einer Sprachverbindung zwischen wenigstens zwei Teilnehmern über ein analoges oder digitales Fernsprechnetz (60), wobei wenigstens der rufende Teilnehmer eine drahtlose Kommunikationseinrichtung (50) enthält, welche eine WLAN-Schnittstelle (51) und eine Einrichtung (53) zum Steuern einer IP-Telefonie von und zu einer mit einer Teilnehmeranschlusseinrichtung (20) des rufenden Teilnehmers verbundenen WLAN-Basisstation (40) enthält, und eine GSM-Funkschnittstelle (52) aufweist, um eine Kommunikation über ein Mobilfunknetz führen zu können, mit folgenden Schritten:
Eingeben einer vorbestimmten Teilnehmerrufnummer eines am Fernsprechnetz (60) angeschlossenen Teilnehmers (70) an der drahtlosen Kommunikationseinrichtung (50) des rufenden Teilnehmers;
Aufbauen einer IP-Telefonverbindung von der drahtlosen Kommunikationseinrichtung (50) als Sprachverbindung zu der WLAN-Basisstation (40),
Aufbauen einer Sprachverbindung über das Fernsprechnetz (60) zum gerufenen Teilnehmer (70),
Signalisieren der ankommenden Sprachverbindung dem gerufenen Teilnehmer (70),
Annehmen der Sprachverbindung,
Umsetzen von von der drahtlosen Kommunikationseinrichtung kommenden IP-basierten Sprachsignalen in Sprachsignale, die über das Fernsprechnetz (60) übertragen werden, und/oder Umsetzen von über das Fernsprechnetz empfangenen Sprachsignalen in IP-basierte Sprachsignale und Übertragen der IP-basierten Sprachsignale über die drahtlose IP-Telefonverbindung zur drahtlosen Kommunikationseinrichtung, wobei
von der drahtlosen Kommunikationseinrichtung (50) des rufenden Teilnehmers abgehende Gespräche über die WLAN-Basisstation (40) in das Fernsprechnetz (60) geleitet werden, solange sich die drahtlose Kommunikationseinrichtung (50) im Versorgungsbereich der WLAN-Basisstation (40) aufhält und andernfalls abgehende Gespräche über die GSM- Funkschnittstelle (52) in das Mobilfunknetz geleitet werden.

## Claims

1. Local communication system (10) having at least one subscriber line device (20) installed at a user's and being connected to a telephone network (60),
at least one WLAN base station (40) for use in a local wireless network, the base station having at least one interface (41) for switching the WLAN base station (40) onto the telephone network (60),
a WLAN interface (42) for communicating with a wireless communication device (50) and
a device (43) for converting speech signals coded according to a communications protocol for the control of IP telephony into speech signals that can be transmitted via a telephone network,
at least one wireless communication device (50) comprising a WLAN interface (51) for transmitting and receiving IP speech signals to or from the WLAN base station (40), respectively,
a device (53) for controlling IP telephony from and to the WLAN base station (40) and a GSM radio interface (52) for communicating with a mobile radio network,
wherein
the wireless communication device is configured in such a way that outgoing calls are routed via the WLAN base station (40) into the telephone network (60) as long as the wireless communication device (50) is in the coverage area of the WLAN base station (40), and otherwise outgoing calls are routed via the GSM radio interface (52) into the mobile radio network.

2. The local communication system according to claim 1,
**characterized in that**
an analog and/or digital interface (41) for switching the WLAN base station (40) onto the telephone network (60) is provided in the WLAN base station (40).

3. The local communication system according to claim 1 or 2,
**characterized in that**
the WLAN base station (40) has a device (44) for setting up an IP telephone connection via its WLAN interface (42).

4. The local communication system according to claim 3,
**characterized in that**
the conversion device (43) of the WLAN base station (40) comprises a SIP proxy.

5. The local communication system according to any one of claims 1 to 4,
**characterized in that**
the WLAN base station (40) is a mobile device.

6. The local communication system according to any one of claims 1 to 5,
**characterized in that**
the control device (53) of the wireless communication device (50) can set up an IP telephone connection to the WLAN base station (40).

7. The local communication system according to claim 6,
**characterized in that**
the control device (53) of the wireless communication device (50) accesses an IP communication protocol containing the SIP protocol.

8. The local communication system according to any one of claims 1 to 7,
**characterized in that**
the telephone network (60) is an analog or digital telephone network.

9. A method for setting up a voice connection between at least two subscribers via an analog or digital telephone network (60), wherein at least the called subscriber comprises a wireless communication device (50) comprising a WLAN interface (51) and a device (53) for controlling IP telephony from and to a WLAN base station (40) connected to a subscriber line device (20) of the called subscriber, and a GSM radio interface (52) in order to be able to communicate via a mobile radio network, the method comprising the following steps:
entering a predetermined subscriber number of a subscriber (70) connected to the telephone network (60) at the wireless communication device (50) of the calling subscriber;
setting up an IP telephone connection from the wireless communication device (50) to the WLAN base station (40) as a voice connection,
setting up a voice connection to the called subscriber (70) via the telephone network (60),
signalling the incoming voice connection to the called subscriber (70),
accepting the voice connection,
converting IP-based speech signals coming from the wireless communication device into speech signals that are transmitted via the telephone network (60), and/or converting speech signals received via the telephone network into IP-based speech signals, and
transmitting the IP-based speech signals via the wireless IP telephone connection to the wireless communication device, wherein
calls going out from the wireless communication device (50) of the calling subscriber are routed into the telephone network (60) via the WLAN base station (40), as long as the wireless communication device (50) is in the coverage area of the WLAN base station (40), and otherwise outgoing calls are routed into the mobile radio network via the GSM radio interface (52).

## Revendications

1. Équipement de communication local (10) comportant au moins un dispositif terminal d'abonné (20) installé chez un utilisateur et relié à un réseau de télécommunication (60),
au moins une station de base WLAN (40) pour l'utilisation dans un réseau local sans fil, la station de base comprenant
au moins une interface (41) pour la connexion de la station de base WLAN (40) au réseau de télécommunication (60),
une interface WLAN (42) pour la communication avec un dispositif de communication sans fil (50) et
un dispositif (43) pour la conversion de signaux vocaux codés selon un protocole de communication pour la commande d'une téléphonie IP, en signaux vocaux aptes à être transmis via un réseau de télécommunication,
au moins un dispositif de communication sans fil (50) présentant une interface WLAN (51) pour envoyer des signaux vocaux IP à la station de base WLAN (40) et/ou recevoir des signaux vocaux IP de celle-ci, un dispositif (53) pour la commande d'une téléphonie IP depuis et vers la station de base WLAN (40) et une interface radio GSM (52) pour la communication avec un réseau de radiocommunication mobile,
le dispositif de communication sans fil étant conçu de manière que les communications sortantes soient acheminées vers le réseau de télécommunication (60) via la station de base WLAN (40) tant que le dispositif de communication sans fil (50) se situe dans la zone de couverture de la station de base WLAN (40) et que, dans le cas contraire, les communications sortantes soient acheminées vers le réseau de radiocommunication mobile via l'interface radio GSM (52).

2. Équipement de communication local selon la revendication 1,
**caractérisée en ce**
**qu'**une interface analogique et/ou numérique (41) pour la connexion de la station de base WLAN (40) au réseau de télécommunication (60) est prévue dans la station de base WLAN (40).

3. Équipement de communication local selon l'une des revendications 1 ou 2,
**caractérisé en ce que**
la station de base WLAN (40) comprend un dispositif (44) pour l'établissement d'une communication téléphonique IP via son interface WLAN (42).

4. Équipement de communication local selon la revendication 3,
**caractérisé en ce que**
le dispositif de conversion (43) de la station de base WLAN (40) comprend un proxy SIP.

5. Équipement de communication local selon l'une des revendications 1 à 4,
**caractérisé en ce que**
la station de base WLAN (40) est un dispositif mobile.

6. Équipement de communication local selon l'une des revendications 1 à 5,
**caractérisé en ce que**
le dispositif de commande (53) du dispositif de communication sans fil (50) est apte à établir une communication téléphonique IP vers la station de base WLAN (40).

7. Équipement de communication local selon la revendication 6,
**caractérisé en ce que**
le dispositif de commande (53) du dispositif de communication sans fil (50) accède à un protocole de communication IP comprenant le protocole SIP.

8. Équipement de communication local selon l'une des revendications 1 à 7,
**caractérisé en ce que**
le réseau communication (60) est un réseau de télécommunication analogique ou numérique.

9. Procédé d'établissement d'une communication vocale entre au moins deux abonnés via un réseau de télécommunication (60) analogique ou numérique, au moins l'abonné appelé comportant un dispositif de communication sans fil (50) comprenant une interface WLAN (51) et un dispositif (53) pour la commande d'une téléphonie IP depuis ou vers une station de base WLAN (40) reliée à un dispositif terminal d'abonné (20) de l'abonné appelé, et présentant une interface radio GSM (52) afin de pouvoir communiquer via un réseau de radiocommunication mobile, comprenant les étapes suivantes:
saisie, au niveau du dispositif de communication sans fil (50) de l'abonné appelant, d'un numéro d'abonné prédéterminé d'un abonné (70) connecté au réseau de télécommunication (60);
établissement d'une communication téléphonique IP depuis le dispositif de communication sans fil (50) comme communication vocale vers la station de base WLAN (40),
établissement d'une communication vocale via le réseau de télécommunication (60) vers l'abonné appelé (70),
signalisation de la communication vocale entrante à l'abonné appelé (70),
acceptation de la communication vocale,
conversion des signaux vocaux IP venant du dispositif de communication sans fil en signaux vocaux transmis via le réseau de télécommunication (60) et/ou conversion des signaux vocaux reçus via le réseau de télécommunication en signaux vocaux IP et
transmission des signaux vocaux IP via la communication téléphonique IP sans fil au dispositif de communication sans fil,
les communications sortantes du dispositif de communication sans fil (50) de l'abonné appelant étant acheminées via la station de base WLAN (40) vers le réseau de télécommunication (60) tant que le dispositif de communication sans fil (50) se situe dans la zone de couverture de la station de base WLAN (40), et, dans le cas contraire, les communications sortantes étant acheminées vers le réseau de radiocommunication mobile via l'interface de radiocommunication GSM (52).
